(19) Europäisches Patentamt

European Patent Office

Office européen des brevets

(11) **EP 1 237 758 B1**

(12) **EUROPÄISCHE PATENTSCHRIFT**

(45) Veröffentlichungstag und Bekanntmachung des Hinweises auf die Patenterteilung:
**02.02.2005 Patentblatt 2005/05**

(21) Anmeldenummer: 01983539.6

(22) Anmeldetag: **09.10.2001**

(51) Int Cl.⁷: **B60R 21/01**

(86) Internationale Anmeldenummer:
**PCT/EP2001/011680**

(87) Internationale Veröffentlichungsnummer:
**WO 2002/030716 (18.04.2002 Gazette 2002/16)**

(54) **VERFAHREN UND VORRICHTUNG ZUR AKTIVIERUNG VON INSASSENSCHUTZEINRICHTUNGEN**

METHOD AND DEVICE FOR ACTIVATING PASSENGER PROTECTION DEVICE

PROCEDE ET UN DISPOSITIF POUR ACTIVER DES INSTALLATIONS DE PROTECTION DES OCCUPANTS D'UN VEHICULE

(84) Benannte Vertragsstaaten:
**FR GB IT**

(30) Priorität: **10.10.2000 DE 10049911**

(43) Veröffentlichungstag der Anmeldung:
**11.09.2002 Patentblatt 2002/37**

(73) Patentinhaber: **DaimlerChrysler AG**
**70567 Stuttgart (DE)**

(72) Erfinder:
• **BULLINGER, Wilfried**
**70825 Korntal-Münchingen (DE)**
• **RUDOLF, Harald**
**72072 Tübingen (DE)**

(56) Entgegenhaltungen:
**EP-A- 0 728 624**     **DE-A- 4 424 878**
**DE-A- 19 729 960**     **US-A- 3 893 114**
**US-A- 5 835 007**

**Beschreibung**

Die vorliegende Erfindung bezieht sich auf ein Verfahren und eine Vorrichtung zur Aktivierung von Insassenschutzeinrichtungen nach den Merkmalen des Oberbegriffs des Verfahrensanspruches 1 und den Merkmalen des Vorrichtungsanspruches 6.

Bei Verfahren zur Aufprallerkennung werden üblicherweise Beschleunigungssignale eines Beschleunigungssensors ausgewertet, und in Abhängigkeit davon wird entschieden, ob ein sicherheitskritischer Gefahrenfall vorliegt und der Airbag und/oder andere Insassenschutzeinrichtungen ausgelöst werden sollen.

So ist aus der deutschen Offenlegungsschrift DE 197 29 960 ein Verfahren zur Aufprallerkennung, insbesondere für Kraftfahrzeuge, zur Aktivierung von Insassenschutzeinrichtungen bekannt, bei dem ein Beschleunigungssignal eines Beschleunigungssensors gemessen wird. Das Beschleunigungssignal direkt oder ein daraus abgeleitetes Signal, wie beispielsweise das integrierte Beschleunigungssignal, wird dann mit einer Auslöseschwelle verglichen, die einstellbar ist.

Für dieses Verfahren ist zumindest ein sogenannter Pre-Crash-Sensor vorgesehen, der die Änderung der Relativgeschwindigkeit und/oder des Relativabstandes von Kollisionsobjekten innerhalb eines Nahbereichs der Fahrzeugumgebung registriert. Falls der Pre-Crash-Sensor einen sicherheitskritischen Zustand wie einen bevorstehenden Aufprall erkennt, wird die Auslöseschwelle zur Aktivierung von Insassenschutzeinrichtungen herabgesetzt.

Vorzugsweise wird sogar jeder Fahrzeugseite ein solcher Pre-Crash-Sensor zugeordnet, und in Abhängigkeit der von diesem Sensor ermittelten Signale wird die Auslöseschwelle des auf der jeweiligen Seite liegenden Seitenairbags reduziert oder nicht.

Wird bei diesem Verfahren innerhalb eines Nahbereichs vom Pre-Crash-Sensor durch Vergleich mit entsprechenden Schwellenwerten ein sicherheitskritischer Zustand erkannt, so wird die Auslöseschwelle zur Aktivierung von Insassenschutzeinrichtungen herabgesetzt. Die Auslösung erfolgt jedoch erst, nachdem das Beschleunigungssignal bzw. das daraus abgeleitete Signal diese entsprechende Auslöseschwelle überschreitet.

Dadurch, daß bei diesem Verfahren die Auslöseschwelle nur in Abhängigkeit von der Relativgeschwindigkeit und/oder dem Relativabstand von Kollisionsobjekten herabgesetzt wird, können Einflüsse wie beispielsweise die Signalqualität eines Näherungssensors oder auch eine Kollisionsobjektgröße bei der Höhe der Auslöseschwelle nicht mitberücksichtigt werden. So kann bei großen Kollisionsobjekten beispielsweise nicht immer sichergestellt werden, daß der Sensor auch den kleinstmöglichen Abstand zwischen Sensor und Fahrzeug erfaßt hat. Daher kann es in einem solchen Fall sein, daß das herannahende Kollisionsobjekt etwas früher auf das Fahrzeug trifft, als es ursprünglich berechnet wurde.

Aus der deutschen Offenlegungsschrift DE 195 46 715 ist eine Sensorik für die Auslösung eines Seitenairbags mit mindestens einem in jeder Karosserietür integrierten Sensor, der ein Steuersignal für die Auslöseelektronik des Airbags generiert, ist bekannt. Bei dieser Sensorik werden in der Karosserietür mindestens zwei nebeneinander beabstandet angeordnete Sensoren integriert, die jeweils eine Sende- und Empfangsstufe aufweisen, mit der ein Mikrowellensignal abgestrahlt wird, dessen Antennenkeule eine geringe Halbwertsbreite aufweist und lotrecht auf der Türoberfläche steht. Die an einem sich annähernden Kollisionsobjekt reflektierten Mikrowellensignale werden auf eine Auswerteeinheit zur Generierung eines Freigabeimpulses gegeben.

Bei einer solchen Airbagsensorik hat es sich jedoch gezeigt, daß die Sicherheitseinrichtungen bereits direkt von den Pre-Crash-Sensoren aktiviert werden, was die Gefahr von Fehlauslösungen beispielsweise bei Beinahezusammenstößen extrem erhöht. Solche Fehlauslösungen sind aber insbesondere deshalb sehr nachteilig, da unter Umständen gerade bei Beinahezusammenstößen die Reaktionsfähigkeit des Fahrers sehr wichtig ist und gerade diese durch auslösende bzw. ausgelöste Sicherheitseinrichtungen stark beeinträchtigt wird.

Ein Verfahren und eine Vorrichtung zum Steuern einer auslösbaren Insassenrückhalteeinrichtung ist auch aus der EP 0 728 624 A3 bekannt. Bei diesem Verfahren wird die Crash-Beschleunigung ermittelt und ein Crash-Wert bestimmt, der von der ermittelten Crash-Beschleunigung abhängt. Dieser bestimmte Crash-Wert wird mit einem Schwellenwert verglichen. Der Schwellenwert wird in Abhängigkeit von zumindest einem Zielbereich, einer Zielannäherungsgeschwindigkeit und einen Einfallswinkel variiert, und es wird ein Auslösesignal bereitgestellt, wenn der bestimmte Crash-Wert größer ist als der Schwellenwert.

Dabei hat es sich aber als nachteilig erwiesen, daß die Absenkung der Auslöseschwelle für Beschleunigungssensoren im Falle eines drohenden Aufpralls zu einer zu frühen Auslösung der Insassenrückhalteeinrichtung führen kann, wenn bereits in der Zeitspanne vor dem Aufprall die abgesenkte Beschleunigungsauslöseschwelle überschritten wird. Dies kann z.B. bei Bodenunebenheiten oder einer Bordsteinüberfahrung unmittelbar vor dem eigentlichen, vom Näherungssensor erfaßten Hindernis geschehen.

Als besonders kritisch erweist sich in der Praxis eine Verunfallung mit einem Seitenaufprall, wenn das Fahrzeug schleudert und sich in Querrichtung bewegt. Auch kann es insbesondere bei Seitenaufprallsensoren mit Radar oder Infrarot immer wieder zu Fehlalarmauslösungen bei einem dichten Vorbeifahren an Kollisionsobjekten wie parkenden Fahrzeugen oder Gegenverkehr kommen, wodurch die Auslöseschwelle der Beschleunigungssensoren im Fahrzeug unnötig abgesenkt wird. Dadurch erhöht sich die Gefahr einer Fehlauslösung beispielsweise von Airbags.

Da der in dieser EP 0 728 624 A3 beschriebene Radarsensor auch permanent die Näherungsgeschwindigkeit, den Abstand, Winkel, usw. von möglichen Kollisionsobjekten berechnen muß, ist ein hoher Signalverarbeitungsaufwand und damit eine hohe Rechenleistung erforderlich. Für die zuverlässige Erkennung eines Seitenaufpralls werden zudem mindestens je zwei solcher Sensoren pro Seite benötigt, was zu einem relativ hohen Kostenaufwand führt.

Die Verwendung von Annäherungssensoren, welche Radarsysteme, Infrarot- und/oder Magnetfeldsensoren sein können, ist des Weiteren in der DE 44 24 878 A1 beschrieben.

Eine Kombination eines Näherungssensors mit einem Beschleunigungssensor zur Berechnung eines Auslösezeitpunktes für Sicherheitseinrichtungen eines Kraftfahrzeuges bei einem bevorstehenden Crash ist in der US 5,835,007 beschrieben.

Aus der US 3,893,114 ist ein Verfahren und eine Vorrichtung zur Feststellung eines drohenden Zusammenstoßes ein Fahrzeugs mit einem Gegenstand (Oberbegrift der Ansprüche 1 und 5) bekannt. Dieses Verfahren nutzt ausgesendete und reflektierte, frequenzmodulierte, ungedämpfte Wellen von einer an einem Vorderteil des Fahrzeugs montierten Antenne, wobei die ausgesendeten und empfangenen Wellen zur Gewinnung einer niederfrequenten Welle gemischt werden und die niederfrequente Welle in ein Dopplersignal, eine Grundwellenkomponente und Oberwellenkomponenten aufgeteilt wird. Dabei werden das abgetrennte Dopplersignal und wenigstens ein Dopplersignal, das aus der Grundwellenkomponente und den Öberwellenkomponenten gewonnen wird, abgeleitet, und es werden wenigstens zwei sich in der Phase voneinander unterscheidende Komponenten aus den Dopplersignalen ausgewählt. Ein Bezugszeitpunkt in einer Periode eines der mindestens zwei Dopplersignale sowie ein Zeitpunkt in der Periode, bei dem die beiden Dopplersignale die gleiche Intensität haben, bestimmen ein Zeitintervall, welches bei Erreichen eines vorbestimmten Wertes eine drohende Kollision repräsentiert, so dass bei Erreichen dieses Wertes ein Signal zur Betätigung von Sicherheitseinrichtungen des Fahrzeugs abgegeben wird.

Die jeweils bis zu einem vorausberechneten Zusammenstoß ablaufende Zeitspanne kann somit ohne Einbeziehung des Abstandes zwischen dem Gegenstand und dem Fahrzeug sowie deren Relativgeschwindigkeiten unmittelbar aus der Phase zwischen mindestens zwei Frequenzkomponenten der niederfrequenten Welle und ihren Intensitäten bestimmt werden. Zur Plausibilisierung wird die zusätzliche Heranziehung der Relativgeschwindigkeit des Gegenstandes in Bezug auf das Fahrzeug und die Verwendung eines Näherungssensors vorgeschlagen.

Nachteilig ist bei diesem insgesamt vergleichsweise aufwendigen System jedoch, dass Streuungen der verwendeten Sensoren. und die aktuellen Fahrbedingungen nur unzureichend Eingang. in die Bestimmung des Auslösezeitpunktes für Sicherheitseinrichtungen des Fahrzeugs finden.

Ausgehend hiervon ist es daher Aufgabe der vorliegenden Erfindung, ein Verfahren und eine Vorrichtung zur Aktivierung von Insassenschutzeinrichtungen bereitzustellen, mit dem es möglich ist, mittels einfacher Einrichtungen eine auf die jeweilige Gefahrensituation genau angepaßte Auslösung einer Insassenschutzeinrichtung bereitzustellen.

Die Aufgabe wird bei einem Verfahren der eingangs genannten Art durch die Merkmale des Patentanspruches 1 und bei einer Vorrichtung der eingangs genannten Art durch die Merkmale des Patentanspruches 6 gelöst.

Mit einem Verfahren gemäß der vorliegenden Erfindung wird es möglich, unter Zuhilfenahme einfacher Sensoren ein sogenanntes Zeitfenster, d.h. einen Zeitbereich für eine Auslöseanforderung zu generieren, in dem nach Übersteigen eines Schwellenwertes eine Auslöseanforderung plausibilisiert wird, worauf gegebenenfalls eine Aktivierung der Insassenschutzeinrichtung bzw. Insassenschutzeinrichtungen erfolgt.

Bei einem solchen erfindungsgemäßen Verfahren kann eine sehr exakte und genaue Auslösung bzw. Aktivierung der Insassenschutzeinrichtungen erfolgen, wobei die Fahrdynamik, Kollisionsobjektgeometrie und die Signalqualität des jeweils verwendeten Näherungssensors mit berücksichtigt werden.

Die zu bestimmenden Größen müssen dabei auch nicht permanent beispielsweise über einen gewissen Bereich gemessen werden, sondern es ist völlig ausreichend, daß eine einmalige Messung bei einem festzulegenden Abstand gestartet wird.

Mit einer erfindungsgemäßen Vorrichtung kann ein derartiges Verfahren unter Verwendung einfacher Näherungssensoren durchgeführt werden. Dadurch, daß die Näherungsgeschwindigkeit an ein Kollisionsobjekt sowie der Abstand und der Winkel zu diesem nicht permanent berechnet werden müssen, ist auch kein hoher Signalverarbeitungsaufwand und damit keine hohen Rechenleistung notwendig, so daß die erfindungsgemäße Vorrichtung mit einfachen und kostengünstigen Mittel realisiert werden kann.

Weitere Vorteile und vorteilhafte Weiterbildungen der vorliegenden Erfindung ergeben sich aus den Patentansprüchen und dem anhand der Zeichnung beschriebenen Ausführungsbeispiel.

Es zeigt hierbei:

Fig. 1 ein Blockschaltbild, das ein erfindungsgemäßes Verfahren darstellt; und

Fig. 2 einen schematischen Ausschnitt einer Seitenstruktur eines Kraftfahrzeuges mit einer erfindungsgemäßen Vorrichtung.

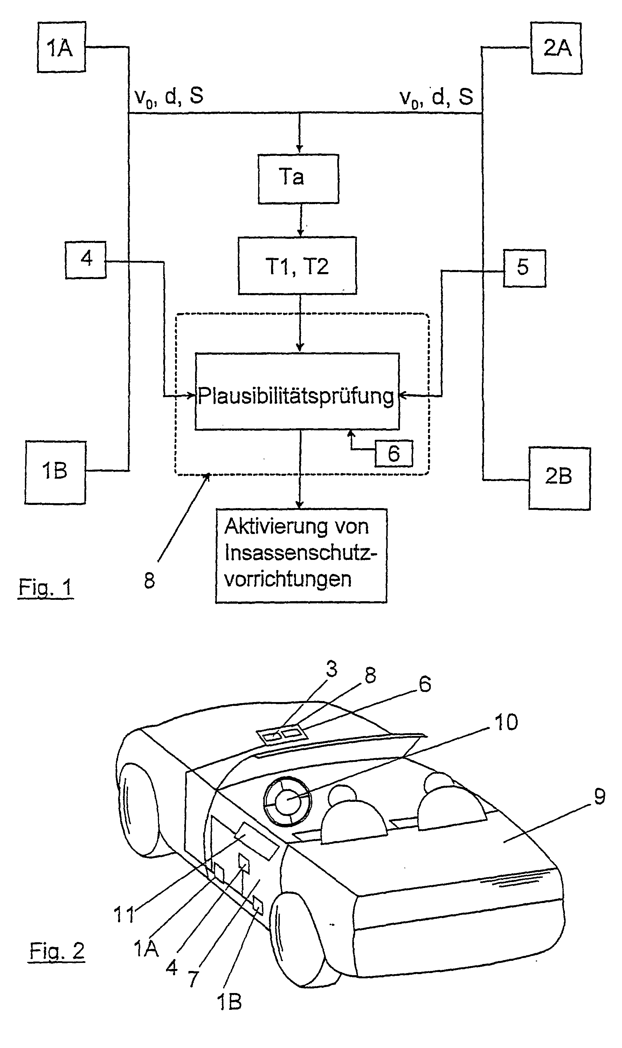

Anhand von Fig. 1 und Fig. 2 sollen nun das Verfahren und die zu deren Durchführung vorgesehene Vorrichtung in einem Kraftfahrzeug 9 näher erläutert werden.

Grundsätzlich werden für ein Verfahren gemäß der vorliegenden Erfindung ein oder mehrere Näherungssensoren 1A, 1B, 2A, 2B verwendet, die in der Lage sind, die Bewegungsrichtung eines Kollisionsobjektes, die Eigengeschwindigkeit v des Kollisionsobjektes und den Abstand d vom Kollisionsobjekt zum eigenen Fahrzeug zu ermitteln. Dies bedeutet, daß eine Annäherungsgeschwindigkeit $v_0$ nach Betrag und Richtung sowie der momentane Abstand d ermittelt werden.

Es ist dabei völlig ausreichend, den Abstand d nicht permanent zu messen, sondern eventuell nur eine einmalige Messung bei einem festzulegenden Abstand, wie beispielsweise ca. 1 m, bei einem drohenden Seitenaufprall zu starten. Ein hierfür verwendbares preisgünstiges Radarsensorsystem ist beispielsweise aus der US-PS 5,872,536 bekannt.

Das Sensorsystem besteht dabei beispielsweise auf einer Seite des Fahrzeugs 9 aus den Näherungssensoren 1A und 1B und auf der anderen Fahrzeugseite aus den Näherungssensoren 2A und 2B. Weiterhin ist auf jeder Fahrzeugseite ein Beschleunigungssensor 4, 5 vorgesehen. Detektieren nun die Näherungssensoren 1A, 1B, und/oder 2A, 2B ein mögliches Kollisionsobjekt innerhalb des vorgegebenen Nahbereichs des Fahrzeuges, so kann aus den von einem solchen Sensorsystem bereitgestellten Meßgrößen, sofern die ermittelte Annäherungsgeschwindigkeit $v_0$ über einem festgelegten Wert $v_{min}$ liegt, der beispielsweise 25 km/h beträgt, in einem ersten Schritt eine theoretische Zeit Ta berechnet werden, zu welcher der Zusammenprall des Fahrzeuges 9 mit dem Kollisionsobjekt theoretisch stattfinden müßte.

Da die Meßwerte des Sensorsystems jedoch mit einer gewissen Streuung behaftet sind und auch weitere Fahrdynamik- und Fahrzeuggeometriegrößen die Zeit bis zum Aufprall beeinflussen können, wird in einem zweiten Schritt die theoretische Aufprallzeit Ta zu einem Zeitfenster bzw. Zeitbereich um den Zeitpunkt Ta herum erweitert, und zwar den Zeitbereich zwischen einem Startzeitpunkt T1 und einem Endzeitpunkt T2.

Die Fahrdynamikgrößen können dabei von den Näherungssensoren 1A, 1B, 2A, 2B erhalten werden, während Fahrzeuggeometriegrößenwerte und eine Signalqualität bzw. Streuung S vorgegebene, also dem Sensor immanente Werte sind.

Die Ermittlung des theoretischen Aufprallzeitpunktes Ta erfolgt durch die Rechnereinheit 3 aus der von dem oder den Näherungssensoren 1A, 1B, 2A, 2B ermittelten orthogonalen Komponenten der Annäherungsgeschwindigkeit $v_0$ in einem vorgegebenen Abstand d und aus dem Abstand d gemäß der Funktion:

$$Ta = d/v_0$$

Der Beginn T1 des Zeitfensters ergibt sich dann aus Ta und einem Korrekturfaktor K1 nach der Funktion:

$$T1 = K1 \times Ta$$

Dabei ist K1 eine Funktion der Signalqualität S eines oder mehrerer der Näherungssensoren 1A, 1B, 2A, 2B. Bei einer sehr hohen Signalqualität S ist K1 nur wenig kleiner als 1, bei einer sehr niedrigen Signalqualität S liegt K1 jedoch typischerweise im Bereich von 0,7 und 0,9.

Kann der Näherungssensor 1A, 1B, 2A oder 2B zwischen großen und kleinen Kollisionsobjekten, beispielsweise Fahrzeugen und Pfosten unterscheiden, wird der Wert K1 bei großen Kollisionsobjekten zusätzlich noch etwas verkleinert, da bei großen Kollisionsobjekten nicht immer sichergestellt werden kann, daß der Sensor auch den kleinstmöglichen Abstand zwischen Sensor und dem Kollisionsobjekt erfaßt hat, und in einem solchen Fall das herannahende Kollisionsobjekt gegebenenfalls etwas früher auftrifft.

Das Ende des Zeitfensters T2 ergibt sich auch aus dem theoretischen Aufprallzeitpunkt Ta und einem Korrekturfaktor K2 gemäß der Beziehung:

$$T2 = K2 \times Ta$$

Dabei ergibt sich K2 zunächst ebenfalls aus der Signalqualität S des oder der Näherungssensoren 1A, 1B, 2A, 2B. Bei einer sehr hohen Signalqualität S ist K2 wiederum nur wenig größer als 1. Hingegen liegt bei einer niedrigen Signalqualität S der Wert K2 typischerweise im Bereich von 1,05 und 1,1.

Da bei einer Kollision mit einem zweiten Fahrzeug das gegnerische Fahrzeug unter Umständen noch bremsen kann, ändert sich dessen Annäherungsgeschwindigkeit noch in der Zeit zwischen der Erfassung im Abstand d durch den Näherungssensor und dem Aufprall. Da der Näherungssensor 1A, 1B, 2A, 2B jedoch nicht die Verzögerung melden kann, wird ein weiterer Korrekturfaktor K3, der das Zeitfenster so weit verlängert, daß der Aufprall auch bei maximaler Verzögerung noch innerhalb des Zeitfensters liegt, eingeführt. Es ist daher das Ende T2 des Zeitfensters ein Produkt gemäß der Funktion:

$$T2 = K2 \times K3 \times Ta$$

,wobei K3 also eine Funktion des gemessenen Abstandes d und der Annäherungsgeschwindigkeit $v_0$ ist.

Beispielhaft soll hier angegeben werden, daß bei einem Abstand d = 1 m und einer Annäherungsgeschwindigkeit $v_0$ = 25 km/h der Korrekturfaktor K3 bei 1,10 liegt, während bei dem Abstand d = 1 m und einer Annäherungsgeschwindigkeit $v_0$ = 72 km/h der Korrekturfaktor K3 bei 1,01 liegt.

Mittels Signalen der Näherungssensoren 1A, 1B, 2A, 2B wird also ein Zeitfenster von T1 bis T2 für eine Auslöseanforderung von Insassenschutzeinrichtungen wie z.B. einem Frontairbag 10 oder einem Seitenairbag 11 generiert. Übersteigt innerhalb dieses Zeitfensters T1, T2 das Signal des Beschleunigungssensors 4 bzw. 5 in der Rechnereinheit 3 einen festen, niedrigen Schwellenwert, der die Auslöseanforderung plausibilisiert, werden entsprechende Insassenschutzsysteme 10, 11 aktiviert.

Im allgemeinen können anstelle von Näherungssensoren 1A, 1B, 2A, 2B auch ein oder mehrere Innendrucksensoren in einer Türe 7 verwendet werden, die ein Zeitfenster für eine Auslöseanforderung der Insassenschutzsysteme 10, 11 generieren.

Während des Zeitfensters, d.h. zwischen dem Startzeitpunkt T1 und dem Endzeitpunkt T2 wird von den Näherungssensoren 1A, 1B, 2A, 2B an die Rechnereinheit 3, welche vorliegend Teil eines Airbagsteuergeräts 8 ist, eine Auslöseanforderung gestellt. Geht innerhalb dieses Zeitfensters T1, T2 bei der Rechnereinheit 3 bzw. dem Airbagsteuergerät 8 zusätzlich noch von einem der im Fahrzeug 9 befindlichen lateralen Beschleunigungssensoren 4, 5 oder einem weiteren Beschleunigungssensor 6 im Airbagsteuergerät 8 oder von sonstigen, beispielsweise in einem Frontbereich des Fahrzeugs 9 angeordneten Assistentensensoren ein Plausibilisierungssignal ein, so werden unmittelbar nach positiver Plausibilitätsprüfung die entsprechenden Insassenschutzsysteme 10, 11 des Fahrzeuges 9 aktiviert.

Bei dem Plausibilisierungssignal handelt es sich gemäß der beschriebenen bevorzugten Ausführungsform um ein über einer festen, sehr niedrigen Beschleunigungsschwelle liegendes Beschleunigungssignal oder ein hierzu äquivalentes oder davon abgeleitetes Signal, welches vorzeichenmäßig mit der von den Näherungssensoren 1A, 1B, 2A, 2B ermittelten Aufprallrichtung übereinstimmt, d.h. nämlich plausibel ist.

Beispielhaft ist in den folgenden beiden Tabellen ein Geschwindigkeitsabbau durch Bremsen dargestellt. Es wurde dabei eine relative Verzögerung, also von dem Fahrzeug 9 selbst und dem Kollisionsobjekt zusammen, von 1 g angenommen.

Um nun erfindungsgemäß ein Zeitfenster für die Auslöseanforderung einer Insassenschutzeinrichtung 10, 11 zu konzipieren, sollten zumindest zwei Näherungssensoren 1A, 1B vorgesehen sein, da je nach Situation die gemessene Geschwindigkeit nur der Quergeschwindigkeit entspricht.

Tabelle 1:

| v [km/h] | v [m/s] | t für 1m [s] | dv während 1 m bei 1 g [m/s] | dv [km/h] | dv [%] | v bei Aufprall [km/h] | Zeitfehler bei Berechnung t_impact [%] |
|---|---|---|---|---|---|---|---|
| 17 | 4,7 | 0,32 | 3,21 | 12 | 68 | 5 | 34 |
| 18 | 5,0 | 0,28 | 2,76 | 10 | 55 | 8 | 28 |
| 20 | 5,6 | 0,23 | 2,26 | 8 | 41 | 12 | 20 |
| 25 | 6,9 | 0,16 | 1,63 | 6 | 23 | 19 | 12 |
| 27 | 7,5 | 0,15 | 1,48 | 5 | 20 | 22 | 10 |
| 30 | 8,3 | 0,13 | 1,30 | 5 | 16 | 25 | 8 |
| 36 | 10,0 | 0,11 | 1,06 | 4 | 11 | 32 | 5 |
| 40 | 11,1 | 0,09 | 0,94 | 3 | 8 | 37 | 4 |
| 72 | 20,0 | 0,05 | 0,51 | 2 | 3 | 70 | 1 |
| 100 | 27,8 | 0,04 | 0,36 | 1 | 1 | 99 | 1 |

Tabelle 2:

| v [km/h] | v [m/s] | t für 1,4 m [s] | dv während 1 m bei 1 g [m/s] | dv [km/h] | dv [%] | v bei Aufprall [km/h] | Zeitfehler bei Berechnung t_impact [%] |
|---|---|---|---|---|---|---|---|
| 20 | 5,6 | 0,39 | 3,86 | 14 | 70 | 6 | 35 |
| 25 | 6,9 | 0,24 | 2,45 | 9 | 35 | 16 | 18 |
| 30 | 8,3 | 0,19 | 1,90 | 7 | 23 | 23 | 11 |
| 36 | 10,0 | 0,15 | 1,51 | 5 | 15 | 31 | 8 |
| 40 | 11,1 | 0,13 | 1,34 | 5 | 12 | 35 | 6 |
| 72 | 20,0 | 0,07 | 0,71 | 3 | 4 | 69 | 2 |
| 100 | 27,8 | 0,05 | 0,51 | 2 | 2 | 98 | 1 |

Bei der in den Tabellen dargestellten Konzeption von Zeitfenstern für eine Auslöseanforderung wurde ein Seitenaufprallsensor bzw. Näherungssensor mit einem vorgegebenen Nahbereich (Confirmation distance) von 1 m und etwa radialer Annäherung verwendet.

Wie den Tabellen entnommen werden kann, ist der Zeitfehler um so größer, je kleiner die Geschwindigkeit v ist. Daher sollten Fehler nur bei Geschwindigkeiten oberhalb ca. 25 km/h berücksichtigt werden, da bei kleineren Geschwindigkeiten sowieso am Besten ein sogenannter "nofire"-Bereich eintritt, das heißt, daß unterhalb einer Mindestgeschwindigkeit keine Auslösung der zugeordneten Insassenschutzeinrichtungen erfolgen soll.

Ein Zeitzuschlag aufgrund von Bremsungen sollte, wie man den Tabellen entnehmen kann, auf ca. 10 % ausgelegt werden, da alle Kollisionen, die aufgrund des Bremsens später auftreten, nicht mehr gefährlich sind, da eine ausreichende Verzögerung stattgefunden hat.

**Patentansprüche**

1. Verfahren zur Aktivierung von Insassenschutzeinrichtungen (10, 11) insbesondere in einem Kraftfahrzeug, bei dem innerhalb eines vorgegebenen Nahbereiches der Fahrzeugumgebung eine Annäherungsgeschwindigkeit an ein Kollisionsobjekt bestimmt wird und, falls die Annäherungsgeschwindigkeit oberhalb eines vordefinierten Schwellenwertes liegt, ein voraussichtlicher Aufprallzeitpunkt (Ta) auf das Kollisionsobjekt und ein von dem voraussichtlichen Aufprallzeitpunkt (Ta) ausgehender Zeitbereich (T1, T2), in dem nach einer Plausibilitätsprüfung die Aktivierung der zugeordneten Insassenschutzeinrichtungen (10, 11) erfolgt, bestimmt wird,
**dadurch gekennzeichnet,**
**dass** die Bestimmung des Zeitbereichs (T1, T2) der Plausibilitätsprüfung in Abhängigkeit einer Signalqualität (S) wenigstens eines Näherungssensors (1A, 1B, 2A, 2B), einer Fahrdynamik und einer Kollisionsobjektgeometrie erfolgt, und dass zur Plausibilitätsprüfung ein Beschleunigungssignal oder ein hierzu äquivalentes Signal dahingehend geprüft wird, ob es über einer vordefinierten Schwelle liegt und vorzeichenmäßig mit der von dem wenigstens einen Näherungssensor (1A, 1B, 2A, 2B) ermittelten Aufprallrichtung übereinstimmt.

2. Verfahren nach Anspruch 1,
**dadurch gekennzeichnet,**
**dass** ein unterer Zeitwert des Zeitbereichs (T1, T2) die Signalqualität (S) des Näherungssensors (1A, 1B, 2A, 2B) und die Kollisionsobjektgeometrie berücksichtigt.

3. Verfahren nach Anspruch 1,
**dadurch gekennzeichnet,**
**dass** ein oberer Zeitwert des Zeitbereichs (T1, T2) die Signalqualität (S) des Näherungssensors (1A, 1B, 2A, 2B) und die Fahrdynamik berücksichtigt.

4. Verfahren nach Anspruch 1,
**dadurch gekennzeichnet,**
**dass** das Beschleunigungssignal mittels zumindest eines Beschleunigungssensors (4, 5) ermittelt wird.

5. Vorrichtung zur Aktivierung von Insassenschutzeinrichtungen (10, 11), insbesondere zur Durchführung des Verfahrens nach einem der Ansprüche 1 bis 4, mit wenigstens einem Näherungssensor (1A, 1B, 2A, 2B) zur Bestimmung einer Annäherungsgeschwindigkeit ($v_0$) an ein Kollisionsobjekt innerhalb eines vorgegebenen Nahbereichs (d) der Fahrzeugumgebung, und mit einer Rechnereinheit (3) zur Bestimmung eines voraussichtlichen Aufprallzeitpunktes (Ta), falls die Annäherungsgeschwindigkeit ($v_0$) oberhalb eines Schwellenwertes liegt, wobei die Rechnereinheit (3) ausgehend von dem voraussichtlichen Aufprallzeitpunkt (Ta) in Abhängigkeit der Signalqualität (S) des wenigstens einen Näherungssensors (1A, 1B, 2A, 2B), einer Fahrdynamik und einer Kollisionsobjektgeometrie einen Zeitbereich (T1, T2) bestimmt und nach einer Plausibilitätsprüfung in diesem Zeitbereich (T1, T2), bei der ein Beschleunigungssignal oder ein hierzu äquivalentes Signal dahingehend geprüft wird, ob es über einer vordefinierten Schwelle liegt und vorzeichenmäßig mit der von dem wenigstens einen Näherungssensor (1A, 1B, 2A, 2B) ermittelten Aufprallrichtung übereinstimmt, eine zugeordnete Insassenschutzeinrichtung (10, 11) aktiviert.

6. Vorrichtung nach Anspruch 5,
   **dadurch gekennzeichnet,**
   **dass** der mindestens eine Näherungssensor (1A, 1B, 2A, 2B) durch einen oder mehrere Innendrucksensoren in einer Fahrzeugtüre (7) bereitgestellt wird.

7. Vorrichtung nach Anspruch 5,
   **dadurch gekennzeichnet,**
   **dass** jeweils in einem Frontbereich sowie in einem Seitenbereich eines Fahrzeugs (9) zwei Näherungssensoren (1A, 1B, 2A, 2B) und ein Beschleunigungssensor (4, 5) vorgesehen sind und ferner in einem Airbagsteuergerät (8) ein weiterer Beschleunigungssensor (6) vorgesehen ist.

**Claims**

1. Method of activating passenger protection devices (10, 11), in particular in a motor vehicle, whereby an approach speed to a collision object is determined within a pre-set short range in the immediate environment of the vehicle and, if the approach speed is above a pre-defined threshold value, an anticipated impact time (Ta) with the collision object and a time range (T1, T2) starting from the anticipated impact time (Ta) is determined, within which the co-operating passenger protection devices (10, 11) will be activated following a plausibility check,
   **characterised in that**
   the time range (T1, T2) of the plausibility check is determined depending on a signal quality (S) of at least one proximity sensor (1A, 1B, 2A, 2B), driving dynamics and the geometry of a collision object, and in order to check the plausibility, an acceleration signal or a signal equivalent to it is checked with a view to ascertaining whether it lies above a pre-defined threshold and matches the impact direction determined by the at least one proximity sensor (1A, 1B, 2A, 2B) in terms of sign.

2. Method as claimed in claim 1,
   **characterised in that**
   a lower time value of the time range (T1, T2) takes account of the signal quality (S) of the proximity sensor (1A, 1B, 2A, 2B) and the geometry of the collision object.

3. Method as claimed in claim 1,
   **characterised in that**
   an upper time value of the time range (T1, T2) takes account of the signal quality (S) of the proximity sensor (1A, 1B, 2A, 2B) and the driving dynamics.

4. Method as claimed in claim 1,
   **characterised in that**
   the acceleration signal is determined by means of at least one acceleration sensor (4, 5).

5. Device for activating passenger protection devices (10, 11), in particular for implementing the method as claimed in one of claims 1 to 4, having at least one proximity sensor (1A, 1B, 2A, 2B) for determining an approach speed ($v_0$) to a collision object within a pre-set short range (d) in the immediate environment of the vehicle, and having a computer unit (3) for determining an anticipated impact time (Ta) if the approach speed ($v_0$) is above a threshold value, which computer unit (3) specifies a time range (T1, T2), starting from the anticipated impact time (Ta), depending on the signal quality (S) of the at least one proximity sensor (1A, 1B, 2A, 2B), a driving dynamic factor and a geometry of the collision object, and after a plausibility check in this time range (T1, T2) during which an acceleration signal or a signal equivalent to it is checked with a view to ascertaining whether it lies above a pre-defined threshold and matches the impact direction determined by the at least one proximity sensor (1A, 1B, 2A, 2B) in terms of sign, a co-operating passenger protection device (10, 11) is activated.

6. Device as claimed in claim 5,
   **characterised in that**
   the at least one proximity sensor (1A, 1B, 2A, 2B) is provided in the form of one more internal pressure sensors in a vehicle door (7).

7. Device as claimed in claim 5,
   **characterised in that**
   two proximity sensors (1A, 1B, 2A, 2B) and an acceleration sensor (4, 5) are provided respectively in a front region and in a side region of a vehicle (9) and another acceleration sensor (6) is provided in an air bag control device (8).


**Revendications**

1. Procédé d'activation de dispositifs de protection d'occupants (10, 11), en particulier dans un véhicule automobile, dans lequel on détermine, à l'intérieur d'une zone de proximité prédéterminée de l'environnement du véhicule, une vitesse d'approche d'un objet à risque de collision et, dans le cas où la vitesse d'approche est supérieure à une valeur de seuil prédéfinie, on détermine un moment d'impact (Ta) prévisionnel sur l'objet à risque de collision et une plage de temps (T1, T2), partant du moment d'impact (Ta) prévisionnel, plage dans laquelle, après avoir procédé à un contrôle de plausibilité, on effectue l'activation des dispositifs de protection des occupants (10, 11) associés, **caractérisé en ce que** la détermination de la plage de temps (T1, T2) du contrôle de plausibilité s'effectue en fonction d'une qualité de signal (S) d'au moins un capteur de proximité (1A, 1B, 2A, 2B), d'une dynamique de roulage et d'une géométrie de l'objet à risque de collision, et **en ce que**, pour le contrôle de plausibilité, on vérifie un signal d'accélération ou un signal équivalent à celui-ci, pour savoir s'il est supérieur à un seuil prédéfini et si, du point de vue du signe, il coïncide avec le sens d'impact ayant été déterminé par l'au moins un capteur de proximité (1A, 1B, 2A, 2B) .

2. Procédé selon la revendication 1, **caractérisé en ce qu'**une valeur de temps inférieure de la plage de temps (T1, T2) prend en considération la qualité de signal (S) du capteur de proximité (1A, 1B, 2A, 2B) et la géométrie de l'objet à risque de collision.

3. Procédé selon la revendication 1, **caractérisé en ce qu'**une valeur de temps supérieure de la plage de temps (T1, T2) prend en considération la qualité de signal (S) du capteur de proximité (1A, 1B, 2A, 2B) et la dynamique de roulage.

4. Procédé selon la revendication 1, **caractérisé en ce que** le signal d'accélération est déterminé à l'aide d'au moins un capteur d'accélération (4, 5).

5. Dispositif d'activation de dispositifs de protection d'occupants (10, 11), en particulier pour la mise en oeuvre du procédé selon l'une des revendications 1 à 4, avec au moins un capteur de proximité (1A, 1B, 2A, 2B) pour déterminer une vitesse d'approche $(v_0)$ d'un objet à risque de collision dans les limites d'une plage de proximité (d) prédéterminée de l'environnement du véhicule, et avec une unité calculatrice (3), devant déterminer un moment d'impact (Ta) prévisible, dans le cas où la vitesse d'approche $(v_0)$ est supérieure à une valeur de seuil, sachant que l'unité calculatrice (3), en partant du moment d'impact (Ta) prévisible en fonction de la qualité de signal (S) du au moins un capteur de proximité (1A, 1B, 2A, 2B), d'une dynamique de roulage et d'une géométrie d'objet à risque de collision, détermine une plage de temps (T1, T2) et, après un contrôle de plausibilité dans cette plage de temps (T1, T2), contrôle lors duquel un signal d'accélération ou un signal de temps équivalent est en plus vérifié, pour savoir s'il est supérieur à un seuil prédéfini et si son signe coïncide avec le sens d'impact déterminé par l'au moins un capteur de proximité (1A, 1B, 2A, 2B), active un dispositif de protection des occupants (10, 11) associés.

6. Dispositif selon la revendication 5, **caractérisé en ce que** l'au moins un capteur de proximité (1A, 1B, 2A, 2B) est fourni par un ou plusieurs capteurs de pression intérieurs, installés dans une portière de véhicule (7).

7. Dispositif selon la revendication 5, **caractérisé en ce que**, chaque fois, dans une zone frontale ainsi que dans une zone latérale d'un véhicule (9), sont prévus deux capteurs de proximité (1A, 1B, 2A, 2B) et un capteur d'accélération (4, 5) et, en outre, un autre capteur d'accélération (6) est prévu dans un appareil de commande de sac gonflable de sécurité (8).

| 1A | | | 2A |

$v_0, d, S$          $v_0, d, S$

Ta

T1, T2

| 4 | | | 5 |

Plausibilitätsprüfung

6

| 1B | | | 2B |

Aktivierung von
Insassenschutzvorrichtungen

Fig. 1          8

Fig. 2          3  8  6  10  9

11  1A  4  7  1B